# FASCICULE DE BREVET EUROPEEN

(11) **EP 3 520 324 B1**
(45) Date de publication et mention de la délivrance du brevet: **07.04.2021**
(21) Numéro de dépôt: 17784375.2
(22) Date de dépôt: 29.09.2017
(51) Int. Cl.: H04L 12/24, H04L 12/26, G06F 11/07

(54) **PROCÉDÉ DE CONTRÔLE DE LA RÉPARTITION DES DISPOSITIFS D'ENREGISTREMENT DÉPLOYÉS DANS LES INFRASTRUCTURES VIRTUALISÉES DE DEUX ENTITÉS**
VERFAHREN ZUR STEUERUNG DER VERTEILUNG DER AUFZEICHNUNGSVORRICHTUNGEN IN VIRTUALISIERTEN INFRASTRUKTUREN VON ZWEI EINHEITEN
METHOD OF CONTROLLING THE DISTRIBUTION OF THE RECORDING DEVICES DEPLOYED IN THE VIRTUALIZED INFRASTRUCTURES OF TWO ENTITIES

(30) Priorité: 03.10.2016 FR 1659524
(43) Date de publication de la demande: 07.08.2019
(73) Titulaire: ORANGE, 75015 Paris (FR)
(72) Inventeur: BIHANNIC, Nicolas, 92326 Châtillon Cedex (FR); FROMENTOUX, Gaël, 92326 Châtillon Cedex (FR); STEPHAN, Emile, 92326 Châtillon Cedex (FR)
(86) Numéro de dépôt international: PCT/FR2017/052684
(87) Numéro de publication internationale: WO 2018/065706

(56) Documents cités:
- FR-A1- 3 030 966
- Etsi: "ETSI GS NFV 002, V1.1.1; Network Functions Virtualisation (NFV); Architectural Framework", , 10 octobre 2013 (2013-10-10), pages 1-21, XP055205312, 650, route des Lucioles ; F-06921 Sophia-Antipolis ; France Extrait de l'Internet: URL:http://www.etsi.org/deliver/etsi_gs/nf v/001_099/002/01.01.01_60/gs_nfv002v010101 p.pdf [extrait le 2015-07-29]
- "Network Functions Virtualisation (NFV); Management and Orchestration; Or-Vnfm reference point - Interface and Information Model Specification;Draft ETSI GS NFV-IFA 007", ETSI DRAFT; DRAFT ETSI GS NFV-IFA 007, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.9.3, 3 août 2016 (2016-08-03), pages 1-126, XP014284706,
- "Network Functions Virtualisation (NFV); Management and Orchestration; Or-Vi reference point - Interface and Information Model Specification;GS NFV-IFA005", ETSI DRAFT; GS NFV-IFA005, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.10.0, 10 décembre 2015 (2015-12-10), pages 1-158, XP014274883,

## Description

### 1. Domaine de l'invention

L'invention se situe dans le domaine des architectures virtualisées de réseaux de télécommunications.

### 2. Etat de la technique antérieure

Les réseaux de télécommunications sont l'objet d'évolutions majeures impactant de façon considérable aussi bien leur déploiement que leur gestion.

La virtualisation des architectures constitue probablement l'une des ruptures technologiques la plus déterminante. La virtualisation des fonctions d'adressage, de nommage, de routage notamment ainsi que le rapprochement des réseaux et du monde informatique impactent très fortement le métier des opérateurs, l'administration des réseaux et les interactions entre les opérateurs et les partenaires, qui sont les fournisseurs d'équipements, les fournisseurs de services ainsi que les clients. Les architectures et l'exploitation de ces réseaux par les opérateurs doivent également prendre en compte cette évolution des réseaux, notamment pour tirer parti au mieux des avantages que présente la virtualisation des réseaux. Notamment, la virtualisation permet une plus grande flexibilité permettant de répondre de façon plus réactive à de nouvelles offres et à des évolutions de trafic. La virtualisation des fonctions repose sur le déploiement d'équipements de préférence banalisés, c'est-à-dire basés sur des systèmes d'exploitation non spécifiques, permettant ainsi de faire baisser les coûts. Ces équipements sont généralement déployés au sein de centre de données (en anglais data centers) qui pourront être plutôt centralisés, donc éloignés des réseaux d'accès des clients, ou distribués, donc plus près des clients. Ce choix entre déploiement centralisé et distribué est effectué en fonction notamment des besoins en termes de latence et d'accessibilité de ces fonctions. Les travaux de standardisation autour de la convergence des techniques utilisées dans les réseaux de télécommunications d'une part et les techniques du monde informatique d'autre part sont discutés au sein du groupe NFV (en anglais Network Function Virtualization) de l'ETSI (en anglais European Telecommunications Standards Institute) Les documents ETSI GS NFV 002 intitulé « Network Functions Virtualization (NFV), Architectural Framework » du 10 Octobre 2013 ainsi que ETSI GS NFV-IFA007 intitulé «Network Functions Virtualization (NFV), Management and Orchestration, Or-Vnfm reference point - Interface and information model spécification » du 3 Août 2016 et enfin ETSI GS NFV-IFA005 intitulé «Network Functions Virtualization (NFV), Management and Orchestration, Or-Vi reference point - Interface and information model spécification » du 10 Décembre 2015 illustrent le travail de l'ETSI sur le sujet de la NFV.

La mise en œuvre d'un service réseau ou Network Service en anglais repose sur le déploiement de plusieurs fonctions virtuelles, appelées VNF (en anglais Virtualized Network funtions). Un service réseau est par exemple un service de CPE (en anglais Customer Premises Equipment) virtuel ou bien un service de réseau privé virtuel tandis qu'une fonction virtuelle VNF est un par exemple une fonction NAT (en anglais Network Address Translation), une fonction HSS (en anglais Home Subscriber Service), une fonction DPI (en anglais Deep Packet Inspection) ou toute autre fonction utilisée pour le déploiement de service réseau. Un service réseau repose sur le déploiement de plusieurs fonctions virtuelles qui sont interconnectées.

Une architecture NFV est mise en œuvre de la façon suivante. Un système de gestion envoie une demande de mise en œuvre de service réseau à une fonction d'orchestrateur. Sur la base de cette demande, l'orchestrateur transmet une requête de déploiement à un gestionnaire de l'infrastructure. Ce gestionnaire met en œuvre les VNFs en respectant un descripteur qui précise les conditions à respecter pour le déploiement et la gestion de ces VNFs. Selon la terminologie ETSI/NFV, le système de management est un OSS/BSS (en anglais Operations Support System/Business Support System), l'orchestrateur est réparti entre un NFVO (en anglais Network Function Virtualization Orchestration) et un VIM (en anglais Virtualized Infrastructure Manager). La flexibilité concernant la localisation des VNFs pour la mise en œuvre d'un service réseau est assez large et celles-ci peuvent par exemple être localisées dans des centres de données (data centers en anglais) plutôt localisés ou distribués au sein de l'infrastructure. L'infrastructure virtualisée au sein de laquelle sont déployées les VNFs est une infrastructure mutualisée accueillant différents types de VNFs, afin de proposer une variété de services réseaux pour des clientèles variées. Cette mutualisation assure une meilleure flexibilité, grâce à la possibilité de rajouter des VNFs si besoin, et cela assure une meilleure maîtrise des coûts sachant qu'une unique infrastructure permet de satisfaire plusieurs services.

Cette flexibilité et cette mutualisation apportent néanmoins de nouvelles contraintes pour l'opérateur, notamment par rapport aux partenaires, clients et fournisseurs. Les caractéristiques inhérentes aux services réseaux, notamment en termes de sécurité et de qualité de service, sont contraignantes et il est indispensable à minima de les maintenir et si possible de les améliorer lorsque la virtualisation des fonctions est choisie et mise en œuvre au détriment d'une architecture basée sur le déploiement d'équipements physiques. Les relations entre les opérateurs et leurs partenaires sont également impactées par le développement d'architectures virtualisées. Notamment, le respect des engagements contractuels ou SLAs (en anglais Service Level Agreement) de l'opérateur avec les partenaires, tels que les fournisseurs d'équipements, est crucial. Notamment, le fournisseur de VNF doit pouvoir s'assurer que la VNF a été déployée selon les paramètres du descripteur. Un fournisseur de service doit pouvoir avoir l'assurance que les services qu'il propose à ses clients ou qu'il met en œuvre pour ses propres besoins sont instanciés selon le contrat signé avec l'opérateur, celui-ci s'engageant sur une certaine qualité de service. Le régulateur, dans les pays où un tel régulateur veut notamment d'assurer des règles de concurrence ou du respect de certaines conditions de sécurité, doit également pouvoir s'assurer de la bonne mise en œuvre des services conformément à un cahier des charges préalablement fixé. Cela lui permet de s'assurer notamment que le service est conforme à ses exigences.

Les VNFs étant mises en œuvre par l'opérateur, il n'existe pas de possibilité pour des entités externes de contrôler que celles-ci sont déployées conformément à ce qui est indiqué dans le descripteur ou de vérifier que les services réseaux déployés à partir d'un chaînage de VNFs est conforme à ce qui est contractualisé entre l'opérateur et le fournisseur de services. L'entité externe, telle que le régulateur, ne peut non plus s'assurer du respect de certaines règles ou de la bonne mise en œuvre d'un service voire d'une fonction spécifique. Hors, un fournisseur de VNF peut avoir besoin d'accéder à des informations de diagnostic lui permettant notamment de pouvoir vérifier que son fonctionnement correspond bien aux spécifications ou bien à pouvoir auditer des VNFs suite à dysfonctionnement détecté sur une autre VNF. Un fournisseur de service, par exemple de réseau privé virtuel, doit également pouvoir accéder, autant que nécessaire et à n'importe quel moment, aux services réseaux opérés par l'opérateur avec lequel il a contractualisé une offre de connectivité ou de fourniture de services réseaux (routage, accès, sécurité...). Une entité en charge de la régulation des offres de services de télécommunications, dans un pays, peut également avoir besoin d'accéder de façon régulière et non programmée aux fonctions activées sur une VNF de façon à s'assurer que les engagements en termes de sécurité ou de respect des règles de concurrence sont bien respectées. Des entités tierces ont besoin de solutions d'accès à des services de contrôle non complètement gérés par l'opérateur assurant la mise en œuvre de l'infrastructure virtualisée de réseaux de communications.

Les événements se produisant sur l'architecture composée de ressources virtualisées (VNF, infrastructure, services...) sont enregistrés dans des registres de données au fur et à mesure, permettant ainsi de conserver l'historique des événements. L'écriture des données dans ces registres est réservée à des dispositifs d'enregistrement possédant les capacités, notamment en termes de sécurité, pour enregistrer les données. La technologie basée sur les chaînes de blocs peut être utilisée pour l'enregistrement des données et la mise à jour des registres associés. Cette technologie permet de protéger les enregistrements contre des modifications non souhaitées des enregistrements et contre une modification par des entités n'ayant pas le droit d'écriture dans ces chaines de blocs. Cette technologie décentralisée d'enregistrement des transactions présente un intérêt y compris dans un contexte des technologies de l'information. Les événements pouvant survenir sur une ressource virtualisée sont par exemple liés à des problèmes de capacité de traitement, d'écoulement de certains flux, de mémoire insuffisante, de liens surchargés, de baisse de qualité de service. Un événement d'une ressource virtualisée peut être identifié comme un changement de l'état, une modification ou une variation du fonctionnement de la ressource virtualisée. Ces événements impactant le service rendu par la ressource virtualisée sont de nature à requérir leur enregistrement dans un registre de données.

Les différentes entités assurant l'enregistrement de données issues des événements dans des registres, par exemple associés à des chaines de blocs, se répartissent ainsi un nombre de dispositifs de validation et d'écriture dans les registres. Cette répartition doit être stable dans le temps, fixée lors de l'établissement du contrat entre les entités ou lors des renégociations de ce contrat, de façon à ce qu'aucune des entités ne dépasse le seuil négocié et par exemple, maîtrise un trop grand nombre de ces dispositifs, pouvant ainsi influencer l'enregistrement et la validation des données écrites dans les registres. Cependant les entités peuvent être amenées à déployer de nouveaux dispositifs d'enregistrement pour assurer la charge de validation et d'écriture, ce qui pourrait impacter la répartition des dispositifs gérés par les entités respectives ayant signé le contrat. Lors de la création de dispositifs d'enregistrement, il convient donc de s'assurer qu'aucune des entités ne dépasse ou n'atteigne pas le seuil négocié dans le contrat.

La présente invention a pour objet de remédier à ces inconvénients.

### 3. Exposé de l'invention

Selon un premier aspect l'invention concerne un procédé de contrôle de la répartition, entre une première et une seconde entité disposant chacune d'une infrastructure de réseau virtualisée, d'une pluralité de dispositifs d'enregistrement d'événements, appelés mineurs, selon la revendication 1.

Le procédé de contrôle permet de répartir entre deux entités le nombre de dispositifs d'enregistrement dans des registres associés à des services. Par exemple, pour un service d'audit ou un service de réseaux privés virtuels déployés sur plusieurs systèmes autonomes d'opérateurs (inter AS VPN), ces dispositifs d'enregistrement, aussi appelés mineurs, peuvent être avantageusement contrôlés par différentes entités. Dans le cas de l'audit, les deux entités sont d'une part l'opérateur de réseau et d'autre part le fournisseur de la ressource virtualisée ou bien une entité en charge de la régulation des offres dans un pays, par exemple. Dans le cas de l'inter AS VPN, la gestion d'une telle offre peut requérir que les mineurs appartiennent respectivement aux deux opérateurs gestionnaires des systèmes autonomes respectifs. La répartition des mineurs dans les entités contribuant au service ou souhaitant des données fiables pour un suivi de service, est cruciale notamment pour assurer une impartialité, voire une fiabilité, des données sauvegardées par les mineurs dans les registres.

L'entité de contrôle assurant la transmission de l'information sur la règle de répartition aux entités de gestion des infrastructures virtualisées respectives peut dans certains cas être un NFVO (en anglais Network Function Virtualization Orchestration) tandis que les entités de gestion des infrastructures virtualisées peuvent être des VIM (en anglais Virtualized Infrastructure Manager).

Le procédé permet de garantir que la répartition des mineurs entre deux entités, par exemple liées par un contrat, est maintenue pendant la durée de vie du service pour lequel des données liées aux événements intervenant sur la ressource virtualisée, sont inscrites dans un registre. Au cours du temps, il est en effet probable que les entités doivent déployer de nouveaux mineurs au sein de leur architecture virtualisée. En l'absence de solution, telle que décrite dans le procédé, l'autre entité n'aurait pas connaissance de la création de ces nouveaux mineurs et il se créerait une distorsion de la règle de répartition. Une plus grande emprise d'une entité sur les dispositifs d'écriture serait susceptible de se produire, impactant au final la confiance accordée aux données enregistrées.

Ce procédé permet d'une part que le dispositif de gestion de l'infrastructure virtualisée de l'entité, ayant connaissance de la création, de la suppression ou de la modification d'un mineur dans l'autre entité, pourra décider d'adapter le nombre de mineurs ou les ressources allouées à ses propres mineurs dans son entité. Ainsi, le taux de répartition des mineurs dans les deux entités est toujours adapté aux créations et suppressions de mineurs intervenant dans l'une des deux entités. La modification d'un mineur qui peut consister par exemple en une variation des capacités mémoire ou une variation des capacités de traitement voire en des modifications des capacités de réception et d'émission de ces mineurs est également à prendre en compte et doit être communiquée aux dispositifs concernés par le procédé.

La ressource virtualisée peut-être une fonction virtuelle VNF (Virtual Network Function) telle que décrite dans les spécifications de référence des infrastructures virtualisées (ETSI GS NFV-MAN 001 V1.1.1 (2014-12)), ou bien une ressource d'infrastructure tel que des liens d'interconnexion entre VNF ou des ressources matérielles liées au stockage et au traitement des informations. La ressource virtualisée peut aussi consister en un service basé sur le chaînage de fonctions virtuelles, les ressources matérielles et par des caractéristiques de services comprenant notamment la qualité de service, la disponibilité, la performance. Les événements pouvant survenir sur une ressource virtualisée impactant le service rendu par cette ressource virtualisée sont de nature à requérir leur enregistrement dans un registre de données.

Selon une caractéristique particulière, l'étape d'obtention d'un ensemble de règles correspond à la réception d'un message, comprenant une information de configuration, émis par un système de support opérationnel.

La règle de répartition des dispositifs d'enregistrement est le plus souvent discutée et formalisée dans un contrat signé par les deux entités. Ce contrat n'est le plus souvent pas directement configuré dans un dispositif de contrôle d'une entité mais dans un système de support opérationnel, plus adapté à se voir configurer une règle de répartition qui peut être par exemple 50%/50% ou 60%/40% entre les deux entités. Cette information est ensuite transmise au dispositif de contrôle qui utilise cette règle pour indiquer par exemple le nombre effectif de mineurs pour chaque entité ou pour fournir un taux de répartition exprimé en pourcentage selon les cas. Si la règle est de 50%/50%, alors le dispositif de contrôle, sachant par exemple que 20 mineurs sont nécessaires pour l'enregistrement des données, indique à chaque entité de gestion d'infrastructure virtualisée de déployer chacun 10 mineurs, respectant ainsi le taux de répartition défini. Il peut également indiquer à chaque dispositif de gestion d'infrastructure virtualisée un taux exprimé en pourcentage ou tout autre moyen permettant d'exprimer la répartition.

Selon une caractéristique particulière, le message de configuration d'au moins un dispositif de gestion de l'infrastructure virtualisée de chaque entité comprend en outre une information liée à l'enregistrement des données dans le registre de données en vue d'adapter le mineur en charge de l'enregistrement.

Le dispositif de contrôle de l'entité en charge d'informer les dispositifs de gestion des infrastructures virtualisées respectives des deux entités peut avantageusement également transmettre des informations liées à l'enregistrement des données. Les conditions relatives au stockage des données dans le registre, par exemple en indiquant le type de chiffrement de ces données voire le niveau d'utilisation maximal des ressources mémoires des mineurs peut être envoyé aux dispositifs de gestion des infrastructures virtualisées en plus du taux de répartition des mineurs. Cette information peut être avantageusement utilisée notamment pour que le mineur décide de demander une mise à niveau des ressources, par exemple en demandant la création d'un nouveau mineur.

Selon une caractéristique particulière, le message de modification comprenant l'information liée à l'arrivée, au départ ou à la modification d'un mineur dans la pluralité, comprend en outre une information liée à la configuration du mineur.

Le dispositif de contrôle, en plus de l'information lié à la création ou la suppression d'un nouveau mineur, peut également maintenir une table dans laquelle sont enregistrée des informations liées aux mineurs mis en œuvre par les deux entités. Par exemple, des informations de localisation, de connectivité ou de capacités peuvent être transmises au dispositif de contrôle afin de détenir une cartographie à jour des mineurs déployés. Ces informations peuvent être utilisées notamment dans le cas où il faut rétablir une configuration réseau qui ne serait plus opérationnelle, suite à une panne ou d'un redémarrage d'équipements du réseau, ainsi que pour informer un dispositif de supervision d'une ressource virtualisée de la création d'un nouveau mineur complétée d'informations liées à la configuration de ce nouveau mineur.

Selon une caractéristique particulière, le procédé de contrôle comprend en outre une étape de création d'un nouveau mineur par un dispositif de gestion de l'infrastructure virtualisée de la deuxième entité lors de la réception de l'information liée à l'arrivée, au départ ou à la modification d'un mineur dans la pluralité, en provenance d'un dispositif de contrôle de la première entité.

A la réception du message en provenance du dispositif de contrôle de la première entité indiquant la création d'un nouveau mineur dans l'infrastructure virtualisée de la première entité, le dispositif de gestion de l'infrastructure virtualisée de la seconde entité crée un nouveau mineur afin de maintenir le taux de répartition des mineurs entre la première et la seconde entité. Cette information de création d'un nouveau mineur doit être transmise au dispositif de contrôle de la première entité conformément au procédé de configuration de la répartition, afin que ledit dispositif de contrôle ait une information toujours à jour du nombre de mineurs présents dans chaque infrastructure virtualisée et puisse le cas échéant prendre une action suite à la réception de cette information.

Selon une caractéristique particulière, l'ensemble de règles obtenues par le dispositif de contrôle de la première entité comprend en outre une information sur la répartition des capacités d'enregistrement des mineurs respectivement déployés dans la première entité et dans la deuxième entité.

Le dispositif de contrôle de la première entité obtient un taux de répartition des mineurs déployés dans la première entité et dans la deuxième entité. Dans certains cas, cette information peut être insuffisante. Il est nécessaire dans certains cas de s'assurer que les capacités d'enregistrement des mineurs déployés dans chaque entité sont également respectées. En effet, un taux de mineurs ne correspond pas forcément à un taux d'enregistrement de données. Si les mineurs déployés par une des deux entités ont moins de capacité d'enregistrement, le taux effectif d'enregistrement des entités peut être différent du taux de répartition de mineurs. L'obtention d'une information liée aux capacités de traitement des mineurs de chaque entité peut être nécessaire pour garantir une répartition correspondant à ce qui a été négocié entre les deux entités. Le dispositif de contrôle peut dans ce cas obtenir en plus d'un taux de répartition des mineurs une information concernant le taux d'enregistrement de chaque entité. Cette information peut être mise à profit pour décider de la création d'un nouveau mineur ou non.

Selon une caractéristique particulière, le dispositif de contrôle est mis en œuvre dans un dispositif d'orchestration de services virtualisés (également appelé en anglais Network Function Virtualization Orchestrator).

Le dispositif d'orchestration des services virtualisés a pour objet d'administrer les cycles de vie des services réseau incluant notamment le déploiement des services réseau, leur adaptation aux besoins de capacité, la mesure de leur performance, la validation de nouvelles ressources. Ce dispositif peut avantageusement mettre en œuvre le procédé de contrôle. Il peut ainsi assurer la gestion de la répartition des entités d'enregistrement est pertinente d'une part pour gérer la répartition des mineurs par entité et d'autre part par cohérence avec les tâches déjà assurées par ce type de dispositif.

Selon une caractéristique particulière, le dispositif de gestion de l'infrastructure virtualisée d'au moins une des deux entités est mis en œuvre dans un VIM (en anglais Virtualized Infrastructure Manager).

Le VIM dans les spécifications de référence des infrastructures virtualisées (ETSI GS NFV-MAN 001 V1.1.1 (2014-12)) gère les ressources de l'infrastructure de l'infrastructure virtualisée comprenant notamment les fonctions de traitement, de stockage et d'interconnexion mises en œuvre sur des machines virtuelles. Ce dispositif peut avantageusement recevoir les informations de répartition des mineurs depuis l'entité de gestion, transmettre l'information relative à la création ou la suppression de mineurs dans l'infrastructure virtualisée dont il assure la gestion et de créer au besoin un nouveau mineur si nécessaire.

Selon une caractéristique particulière, le deuxième message de notification comprenant un paramètre basé sur l'information liée à l'arrivée, au départ ou à la modification d'un mineur dans la pluralité, en provenance d'un dispositif de gestion de l'infrastructure virtualisée de la première entité et envoyée à au moins un dispositif de supervision de la ressource virtualisée, comprend en outre une information liée à la configuration du dispositif d'enregistrement.

Le dispositif en charge de la supervision de la ressource virtualisée (VNF) doit avoir l'information concernant la création du nouveau dispositif d'enregistrement (mineur) pour pouvoir lui transmettre les événements concernant la VNF. Cette information peut être avantageusement complétée par une information permettant de joindre effectivement ce nouveau mineur, par exemple en indiquant l'adresse réseau de ce nouveau mineur. Une information concernant le type de sécurité mis en œuvre par le mineur peut également être transmise de façon le cas échéant, permettre au dispositif de supervision de choisir le mineur ayant un niveau de sécurité adapté à l'événement pour lequel un enregistrement doit être effectué.

Selon un deuxième aspect l'invention concerne un dispositif de contrôle, mis en œuvre dans une première entité, selon la revendication 10.

Selon un troisième aspect l'invention concerne un dispositif de gestion d'une infrastructure virtualisée mis en œuvre dans une première et une seconde entité, disposant chacune d'une infrastructure de réseau virtualisée, selon la revendication 11.

Selon un quatrième aspect, l'invention concerne un système de contrôle de la répartition, entre une première et une seconde entité disposant chacune d'une infrastructure de réseau virtualisée, selon la revendication 12.

Selon un cinquième aspect, l'invention concerne également un programme de contrôle de la répartition, selon la revendication 13.

Selon un sixième aspect, l'invention concerne également un support d'enregistrement lisible par un dispositif de contrôle selon la revendication 14. Les revendications dépendantes présentent des modes de réalisation préférés de l'invention.

### 4. Description détaillée d'au moins un mode de réalisation de l'invention

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
La **figure 1** présente de façon schématique une infrastructure de réseau virtualisée mise en œuvre par deux entités, chacune d'entre elles gérant des ressources virtualisées.
La **figure 2** présente une infrastructure de réseau virtualisée mise en œuvre par deux entités, au sein de laquelle est mise en œuvre un procédé de contrôle de la répartition selon un aspect de l'invention ;
La **figure 3** présente les différents messages échangés entre les dispositifs des deux entités mettant en œuvre le procédé de contrôle de la répartition d'un ensemble de dispositifs d'enregistrement d'événements selon un aspect de l'invention ;
La **figure 4** décrit les différentes étapes du procédé de contrôle de la répartition d'un ensemble de dispositifs d'enregistrement d'événements.
La **figure 5** représente une structure d'un dispositif de contrôle apte à mettre en œuvre un procédé de contrôle de la répartition d'un ensemble de dispositifs d'enregistrement d'événements.

### Description détaillée d'au moins un mode de réalisation de l'invention

Dans la suite de la description, va être décrite un mode de réalisation du procédé de contrôle de la répartition d'un ensemble de dispositifs d'enregistrement d'événements selon l'invention.

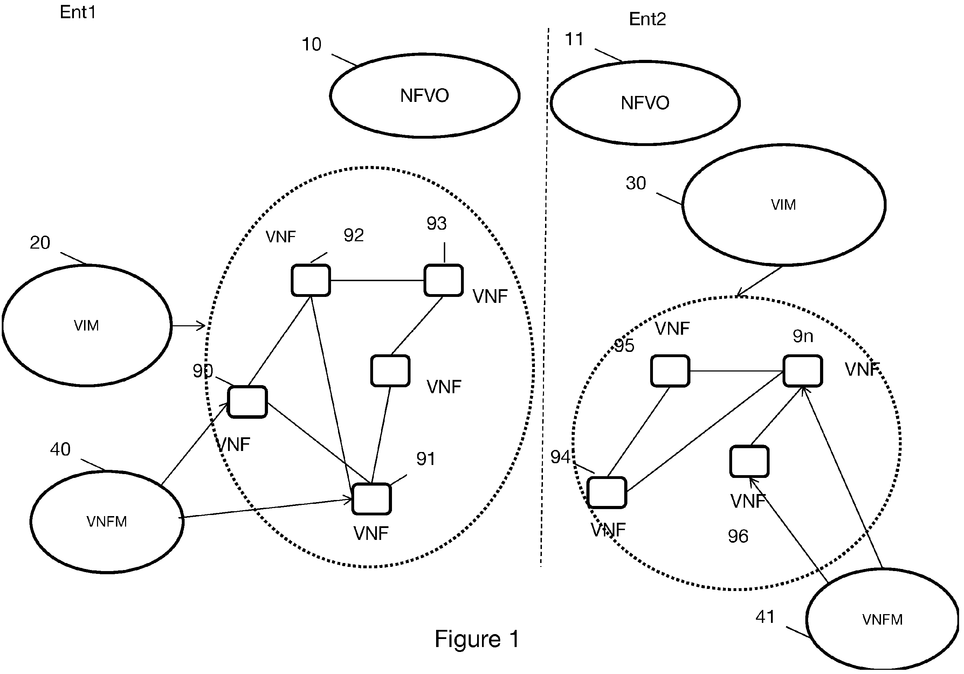

On se réfère tout d'abord à la **figure 1** qui présente de façon schématique, selon l'art antérieur, une infrastructure de réseau virtualisée mise en œuvre par deux entités, Entité 1 et Entité 2, chacune d'entre elles gérant des ressources virtualisées.

Le document ETSI GS NFV 002 (version Octobre 2013) est utilisé comme référence pour présenter sur la figure 1 les infrastructures de réseau virtualisées mise en œuvre par les deux entités. Cette figure permet d'identifier et de faire apparaître les différents dispositifs déployés dans une architecture virtualisée et d'en rappeler leur rôle. En outre, il s'agit, grâce à cette figure, de préciser les responsabilités des entités intervenant dans le procédé tel que décrit dans un mode de réalisation ci-après.

Les deux entités intervenant dans le procédé de ce mode de réalisation sont par exemple un opérateur de télécommunications et une entité tierce qui peut être selon les cas un fournisseur de fonction virtuelle ou VNF (en anglais Virtual Network Function), un régulateur de services de télécommunications ou un autre opérateur de télécommunications. La première entité n'est pas forcément un opérateur de télécommunications et peut être par exemple un fournisseur de service. Les deux entités peuvent être par exemple deux fournisseurs de services intervenant pour la fourniture d'un service à une clientèle. Le procédé de répartition pourra avantageusement être mis en œuvre pour assurer un suivi des événements impactant le service proposé à la clientèle. Ces deux entités peuvent avoir signé un contrat précisant les modalités d'interaction. Les deux entités disposent chacune de leur propre infrastructure virtualisée comprenant les dispositifs suivants :
- un dispositif de contrôle 10, 11 identifiée NFVO en charge du cycle de vie des services réseau et de la mise en œuvre des services à partir des différentes fonctions de l'architecture virtualisée. Plusieurs NFVO peuvent être déployés, notamment pour assurer une meilleure disponibilité du service.
- un dispositif de gestion de l'infrastructure virtualisée 20, 30 identifiée VIM (en anglais Virtualised Infrastructure Manager), en charge des ressources de traitement, de mémorisation et de connectivité de l'infrastructure virtualisée. Une entité peut déployer plusieurs VIM pour une infrastructure virtualisée.
- un dispositif d'administration de ressource virtualisée 40,41 représenté par un VNFM (VNF Manager), en charge du cycle de vie des fonctions virtuelles 90, 91, 92, 93, 94, 95, 96, 9n identifiées VNF. Un dispositif VNFM peut assurer la charge du cycle de vie de plusieurs fonctions virtuelles. Sur la figure 1, le VNFM 40 administre les VNF 90 et 91 tandis que le VNFM 41 administre les fonctions virtuelles 96 et 9n. Le nombre de fonctions virtuelles déployées dans une architecture virtualisée n'est pas limité à priori.

Sur la figure 1, chaque entité dispose d'une infrastructure virtualisée composée des différents dispositifs décrits ci-dessus. Les deux entités, dans cette figure 1, n'ont pas d'interaction et il n'y a pas d'échanges ou d'interfaces de communication entre les différents dispositifs des infrastructures virtualisées respectives.

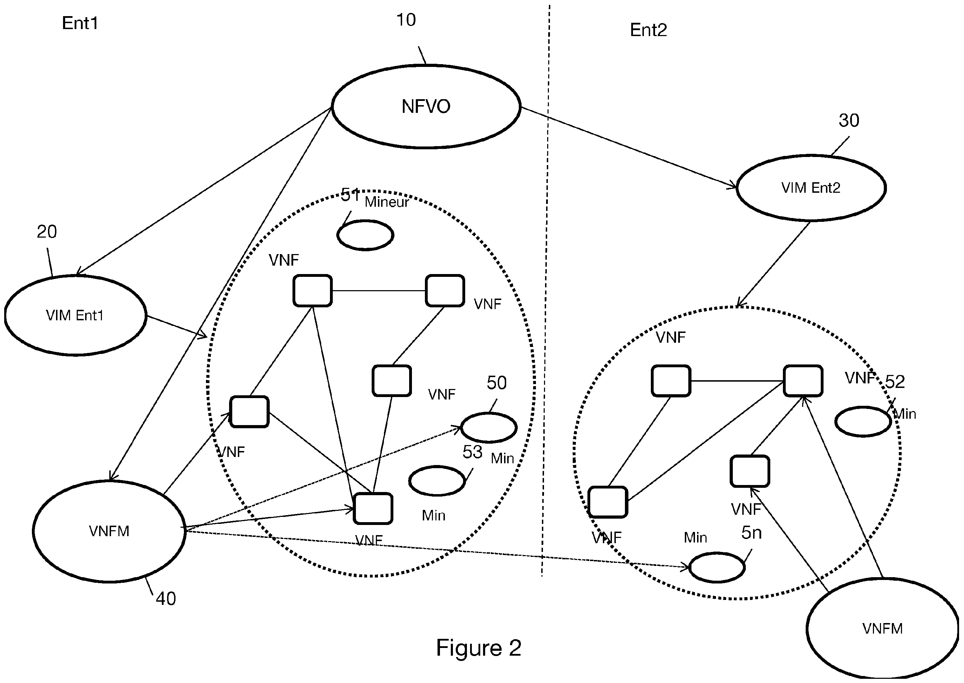

On se réfère maintenant à la **figure 2** qui présente une infrastructure de réseau virtualisée mise en œuvre par deux entités, au sein de laquelle est mise en œuvre un procédé de contrôle de la répartition selon un aspect de l'invention. Dans cette figure, les dispositifs définis dans la figure 1 sont représentés, de nouveaux dispositifs, selon l'invention, sont ajoutés et des interactions apparaissent. De nouvelles ressources virtualisées, des dispositifs d'enregistrement 50, 51, 52, 53, 5n aussi appelés mineurs, sont connectées à l'infrastructure virtualisée de chaque entité. Ces mineurs ont pour rôle d'écrire dans des registres des événements liés aux VNFs. Les registres où sont enregistrées les informations peuvent être administrées par une des entités ou bien être gérées par une troisième entité, par exemple dans un centre de données. Afin de garantir un certain niveau de fiabilité et de sécurité à l'enregistrement des événements, les mineurs doivent utiliser des méthodes de sécurisation avancées permettant d'empêcher les possibilités d'enregistrement par des mineurs qui ne seraient pas reconnus ou qui frauduleusement voudraient inscrire de fausses informations dans les registres. Le contenu des registres devant retranscrire de façon sûre et garantie les événements survenant sur des VNFs, il est nécessaire de faire en sorte que les mineurs ne soient pas contrôlés par une seule entité. Sur la figure 2, les entités 1 et 2 disposent chacune de mineurs assurant l'enregistrement de données liées à des événements survenant sur des VNFs de l'entité 1. Il est donc nécessaire, que les VNF Managers assurant la gestion du cycle de vie des VNFs pour lesquelles il est souhaité d'enregistrer les données issues d'événements, puissent commander l'enregistrement aux mineurs appartenant à l'entité 1 et à l'entité 2. On suppose donc que l'entité 1 et l'entité 2 ont signé un contrat précisant les modalités de la répartition des mineurs gérés par l'entité 1 et ceux gérés par l'entité 2. Sur cette figure 2, le dispositif de contrôle de l'entité 1 interagit avec le VIM 20 de l'entité 1 mais aussi avec le VIM 30 de l'entité 2, ce qui suppose que cette interaction et les modalités notamment liées à la sécurité soient précisées dans le contrat signé entre les deux entités. Sur la figure, c'est le NFVO 10 de l'entité 1 qui assure la gestion du contrôle de la répartition des mineurs mais il pourrait être envisagé que le NFVO 11 de l'entité 2 assure cette gestion, par exemple pour un autre service ou dans un contexte différent.

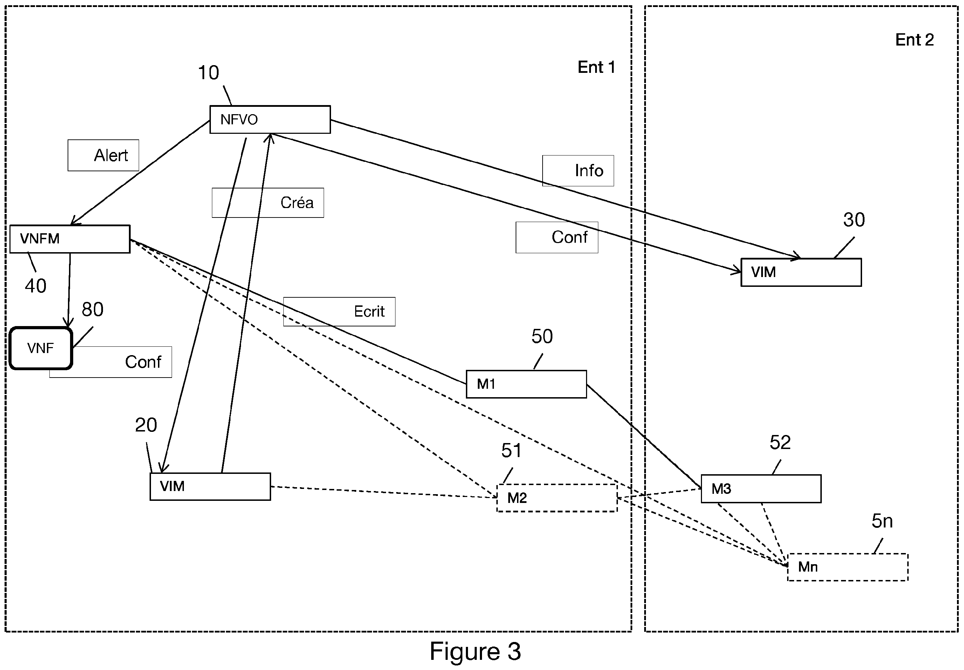

On se réfère maintenant à la **figure 3** qui présente les différents messages échangés entre les dispositifs des deux entités mettant en œuvre le procédé de contrôle de la répartition d'un ensemble de dispositifs d'enregistrement d'événements selon un aspect de l'invention. Les règles de répartition des mineurs entre les deux entités intervenant dans le procédé sont par exemple fournies au NFVO 10 par un système de gestion de type OSS (en anglais Operational Support Systems) configuré avec ces règles de répartition des mineurs et les différentes modalités du contrat définissant par exemple le choix des mineurs de l'entité 1 et de l'entité 2 en fonction du type d'événement ou de l'instant auquel survient l'événement. Dans un mode de réalisation, l'OSS de chaque entité peut être configuré avec ces règles de répartition. Ces règles de répartition sont ensuite transmises au NFVO 10 de l'entité 1. Dans un autre mode de réalisation, ces règles peuvent être configurées directement sur le NFVO voire téléchargées depuis un site distant. Le NFVO 10 assure le contrôle de la répartition des mineurs mais n'a pas connaissance du type ou de la configuration de ces mineurs. Il est donc nécessaire de mettre en place une interaction entre le NFVO 10 assurant le contrôle et les VIMs 30, 30 des entités respectives, d'une part pour leur transmettre le taux de répartition par entité (message conf) et d'autre part d'être avisé par chaque entité des modifications du nombre de mineurs (message créa) pour aviser l'autre entité de cette modification (message info). Il est à noter que l'information concernant la répartition obtenue par le NFVO 10 pourra être modifiée pour être plus explicite pour les VIMs 20, 30. Ainsi, pour une répartition de 50/50 obtenue, le NFVO pourra indiquer à chaque VIM un nombre de mineurs explicite, par exemple 10 mineurs par entité correspondant effectivement à un taux 50/50. Les VNF Manager assurant la gestion du cycle de vie des VNFs pour lesquelles il est souhaité d'enregistrer les événements doivent également être avisé dès qu'une modification des mineurs intervient. Il revient en effet au VNF Manager de commander aux mineurs l'enregistrement des événements dans les registres. Le NFVO 10 ayant connaissance de ces modifications, qu'elles interviennent dans l'entité 1 ou l'entité 2, il revient à celui-ci d'aviser les VNFM concernés de ces modifications. C'est l'objet du message « Alert » indiqué sur la figure 3 entre le NFVO 10 et le VNFM 40. Le VNFM 40 ayant une connaissance à jour des mineurs en charge de l'enregistrement des événements, il peut transmettre la commande d'enregistrement des événements aux mineurs selon un algorithme qui peut être défini dans le contrat liant les deux entités, permettant de répartir la responsabilité d'écriture, le plus souvent en utilisant des moyens permettant de sécurité, des enregistrements entre les mineurs mis en œuvre par les deux entités. Cette commande d'enregistrement est illustrée par le message « Ecrit ».

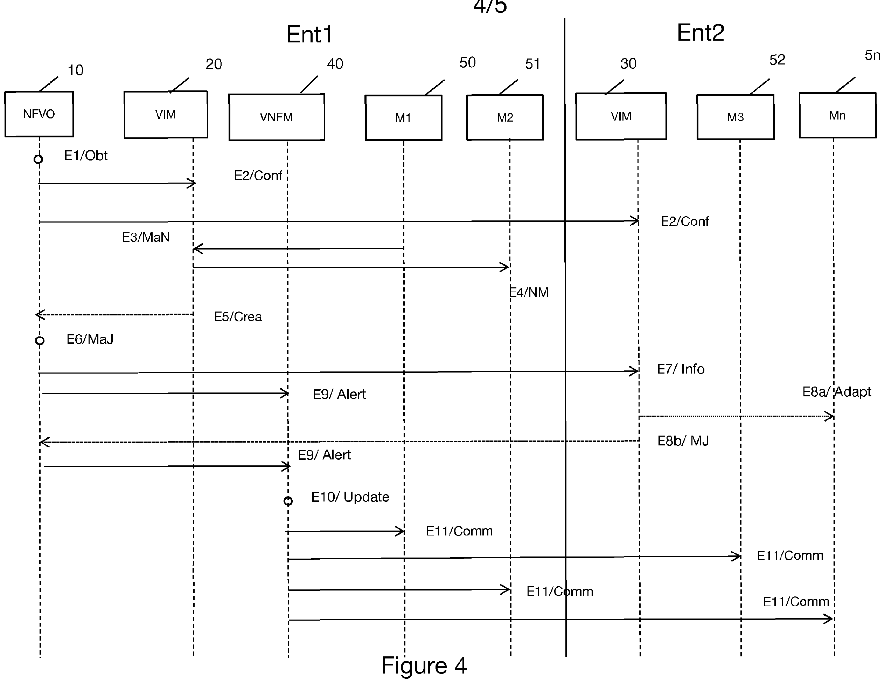

On se réfère maintenant à la **figure 4** qui décrit les différentes étapes du procédé de contrôle de la répartition d'un ensemble de dispositifs d'enregistrement d'événements. Sur la figure sont représentées les deux entités entre lesquelles un accord a été conclu, possiblement via un contrat, définissant le taux de répartition des mineurs pour un service donné ou une VNF donnée. Le service peut être déployé sur plusieurs VNFs et dans ce cas, les VNFM de toutes les VNF concernées doivent envoyer des commandes d'enregistrement à des mineurs. Dans la suite de la description de la figure 4, les commandes d'enregistrement transmises par un seul VNFM sont considérées mais les mêmes étapes seraient présentes dans le cas où plusieurs VNFM devaient transmettre des commandes d'enregistrement. S'il s'agit par exemple un service d'audit, l'entité 1 peut être un opérateur et l'entité 2 un fournisseur de VNF. Le fournisseur de VNF veut par exemple s'assurer que la fonction qu'il a fournie à l'opérateur fonctionne tel que prévu dans les spécifications de la VNF. Les informations d'audit sur la VNF sont alors enregistrées dans un registre qui peut être mise à jour à partir d'événements écrits et certifiés par des mineurs appartenant aux deux entités selon la répartition définie. L'entité 1, qui est l'opérateur ayant déployé la VNF dans son réseau, comprend un NFVO 10, un VIM 20, un dispositif de gestion de la VNF appelé VNFM 40 ainsi que des mineurs 50 et 51. Pour des facilités de lecture, il est considéré que seul le mineur 50 est utilisé à l'initialisation mais il n'existe pas de limitation quant au nombre de mineurs utilisés pour l'enregistrement. L'entité 2, qui peut être le fournisseur de VNF dans l'exemple retenu, comprend un VIM 30 ainsi qu'un mineur 52. Chaque entité dispose donc d'un mineur pour écrire les données issues des événements survenant sur une VNF gérée par le VNFM 20.

Lors d'une étape E1 le NFVO 10 de l'entité 1 obtient les règles de répartition des mineurs indiquant le taux de mineurs remplissant la fonction d'enregistrement pour un service ou une VNF. Celles-ci sont par exemple fixées dans un contrat signé entre les deux entités et sont obtenues par le NFVO par configuration ou après réception d'un message comprenant les règles depuis un autre dispositif de l'entité 1, à savoir une plate-forme d'administration ou un dispositif en charge de la gestion des services, de type OSS. Une fois que le NFVO 10 a connaissance de ces règles, celui-ci les communique aux VIM 20 et 30 de chaque entité, lors de l'étape E2 par l'envoi de messages Conf. A l'initialisation d'un service, chaque VIM est ainsi informée des règles de répartition.

Dans le cas où les mineurs sont beaucoup sollicités pour des commandes d'enregistrement ou si les capacités requises pour valider l'enregistrement effectif dans un registre sont insuffisantes, le mineur peut émettre un message en direction d'un VIM de l'entité à laquelle il appartient pour lui indiquer que ses capacités de traitement atteignent un seuil qui nécessiterait une mise à niveau des ressources. Lors d'une étape E3, le mineur 50 émet un message MaN de mise à niveau de ressources. A la réception du message MaN, le VIM décide alors une action correctrice pour que la fonction de minage soit toujours opérationnelle. Le VIM peut affecter plus de mémoire ou de capacité de traitement aux mineurs existants et il a également la possibilité de créer de nouveaux mineurs. Dans le cas présent, le VIM 20 décide de créer un nouveau mineur M2 51 par un message NM envoyé lors de l'étape E4. La création, dans le mode de réalisation décrit, peut consister à activer un mineur déjà configuré ou à ajouter un nouveau mineur, pouvant être lui-même déployé dans un centre de données distant. Dans un mode de réalisation différent, un dispositif de gestion des mineurs peut être mis en œuvre et sollicité pour créer un nouveau mineur le cas échéant. Dans ce cas la demande de création NM émise lors de l'étape E4 serait envoyée à ce dispositif. Le VIM 20 ayant créé un nouveau mineur dans l'entité 1, il doit informer le NFVO 10 de cette création car elle est de nature à impacter la répartition de mineurs initialement configurée et définie contractuellement par les entités. Cette information sur la création de ce nouveau mineur, ou de ces nouveaux mineurs dans le cas où plusieurs mineurs doivent être créés, est envoyée grâce à un message créa émis lors de l'étape E5. Dans le cas où un VIM décide de supprimer un mineur, pour économiser des ressources par exemple, l'information de suppression doit également être transmise au NFVO. Grâce à cette information reçue du VIM 20, le NFVO 10 lors de l'étape E6 met à jour son taux de répartition en ajoutant ou en soustrayant les mineurs créés ou supprimés. L'information reçue du VIM 20 de l'entité 1 doit également être transmise à l'entité 2. Le NFVO 10 peut choisir d'envoyer l'information concernant la création, ou la suppression de mineurs dans l'entité 1 ou bien décider d'envoyer le nouveau taux de répartition mis à jour lors de l'étape E6. Lors de l'étape E7, le NFVO 10 transmet un message Info au VIM 30 de l'entité 2 pour l'informer de cette modification. A la réception de ce message Info, le VIM 30 peut appliquer la politique qui lui est propre. Il peut décider de ne pas mener d'action particulière, ou bien d'attendre plusieurs messages d'information avant de prendre une décision, voire d'aviser de cette modification un dispositif de gestion du réseau de l'entité 2, par exemple le NFVO de l'entité 2 non représenté sur la figure 4. Dans le mode de réalisation décrit, le VIM 30 décide d'envoyer un message d'adaptation à un mineur 5n lors de l'étape E8a. Ce message d'adaptation peut consister à créer un nouveau mineur dans l'entité 2 de façon à rétablir le taux contractuel de répartition, dans le cas où un nouveau mineur avait été créé dans l'entité 1. Dans ce cas, le VIM 30 doit informer le NFVO 10 de cette adaptation, qui consiste en une création, une modification ou une suppression de mineur, pour que le NFVO 10, qui contrôle la répartition ait toujours une information à jour des mineurs déployés par les deux entités. Le VIM 30 transmet donc un message de mise à jour MJ lors de l'étape E8b.

Les mineurs étant sollicités par le VNFM pour écrire les données issues des événements intervenant sur une VNF dont il assure la gestion, le VNFM doit en permanence être informé du déploiement des mineurs dans les entités. Le NFVO 10 doit donc envoyer un message Alert informant le VNFM 40 des nouveaux mineurs créés ou supprimés dans chaque entité lors d'une étape E9. Le VNFM met ainsi à jour sa base de données comprenant les mineurs qu'il est susceptible de solliciter au cours de l'étape E10. Ainsi, le VNFM 40 est en mesure de transmettre les commandes d'enregistrement à tous les mineurs déployés dans les deux entités grâce à des messages Comm émis lors de l'étape E11. Les commandes d'enregistrement émises par le VNFM dépendent du type de service concerné par le procédé. Dans le cas où il s'agit d'un audit lié à la qualité d'un service, toutes les informations de bande passante sur les liens entre les VNFs intervenant dans la fourniture de service, de congestion dans une VNF intervenant dans le service, de capacités mémoire des VNFs, de perte de paquets seront par exemple susceptibles de requérir des commandes d'enregistrement émise par le VNFM. Les VIM, dans le cas où des informations liées au réseau d'interconnexion devraient également être enregistrées dans un registre, ont aussi la possibilité d'envoyer des commandes d'enregistrement aux mineurs. Les VIM, dans ce mode de réalisation, doivent donc recevoir les mêmes messages que ceux reçus par le VNFM lors de l'étape E9. Ainsi, aussi bien le VNFM que le VIM peuvent envoyer des commandes d'enregistrement aux mineurs et demander un enregistrement de données liées au fonctionnement des VNFs, transmises par la VNFM, ainsi que de l'infrastructure, les données étant alors transmises par le VIM.

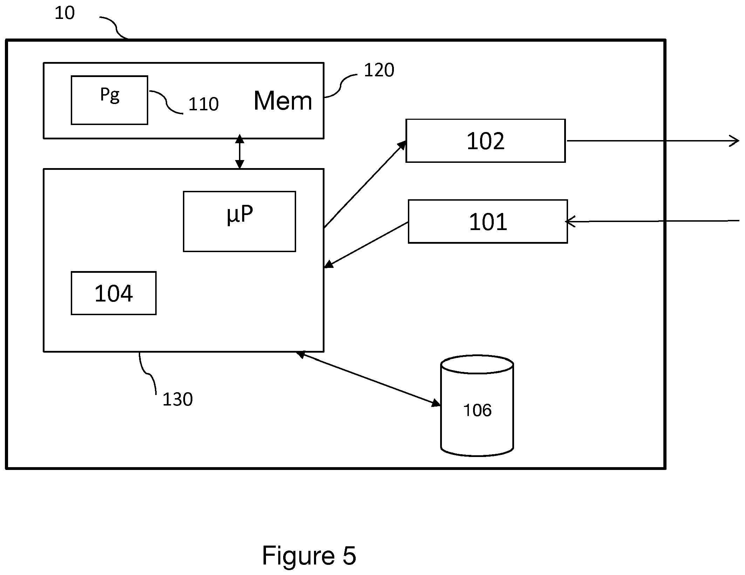

En relation avec la **figure 5****,** on présente maintenant un exemple de structure d'un dispositif de contrôle déployé dans la première entité, selon un aspect de l'invention.

Le dispositif 10 de contrôle met en œuvre le procédé de contrôle de la répartition, entre une première et une seconde entité disposant chacune d'une infrastructure de réseau virtualisée, d'une pluralité de dispositifs d'enregistrement d'événements, appelés mineurs, dans au moins un registre de données, portant sur au moins une ressource virtualisée, selon l'invention, dont différents modes de réalisation viennent d'être décrits.

Par exemple, le dispositif 10 comprend une unité de traitement 130, équipée par exemple d'un microprocesseur µP, et pilotée par un programme d'ordinateur 110, stocké dans une mémoire 120 et mettant en œuvre le procédé de contrôle selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 10 comprend les modules suivants:
- Un module d'obtention 104 agencé pour obtenir un ensemble de règles comprenant un taux de répartition des dispositifs d'enregistrement déployés dans la première entité et dans la seconde entité.
- Un module d'émission 102 agencé
   - pour émettre un message de configuration à au moins un dispositif de gestion de l'infrastructure virtualisée 20,30 de chaque entité, ledit message comprenant ledit ensemble de règles,
   - pour émettre un premier message de notification comprenant une information liée à l'arrivée, au départ ou à la modification d'un mineur dans la pluralité à au moins un dispositif de gestion de l'infrastructure virtualisée 30 de la seconde entité,
   - pour émettre un deuxième message de notification comprenant un paramètre basé sur l'information à au moins un dispositif 40 en charge de l'administration de la ressource virtualisée,
- Un module de réception 101 agencé pour recevoir un message de modification comprenant une information liée à l'arrivée, au départ ou à la modification d'un mineur dans la pluralité, en provenance d'un dispositif de gestion de l'infrastructure virtualisée de la deuxième entité
- Une base de données 106 agencée pour conserver les données liées à la répartition des mineurs dans les deux entités.

Les modules décrits en relation avec la figure 5 peuvent être des modules matériels ou logiciels.

L'invention n'est pas limitée aux exemples de réalisation ci-dessus décrits et représentés, à partir desquels on pourra prévoir d'autres modes et d'autres formes de réalisation, sans pour autant sortir du cadre de l'invention. Le procédé peut notamment être mis en œuvre dans toute infrastructure en nuage aussi appelée Cloud, où les fonctions supportées par les dispositifs de contrôle, de gestion, d'administration et d'enregistrement peuvent être déployés sur des serveurs informatiques distants les uns des autres et interconnectés par un réseau d'interconnexion, par exemple basé sur les technologies Internet.

Le procédé de contrôle de la répartition des mineurs est par exemple particulièrement intéressant pour garantir qu'aucune des deux entités contribuant à la fourniture d'un service ne contrôle l'ensemble des dispositifs certifiant des données provenant d'événements survenant sur des ressources contribuant à la fourniture du service. Par exemple, lorsqu'un client émet une réclamation pour un service, ce procédé permet d'écarter qu'un des acteurs puisse être mis en défaut parce qu'il pourrait avoir enregistré de mauvaises données, volontairement ou non, dans un registre en contrôlant l'ensemble ou un trop grand nombre de mineurs. Ce procédé peut s'avérer tout à fait utile dans les architectures basées sur les chaînes de blocs consistant à enregistrer des informations dans une chaîne de bloc pour conserver l'historique des transactions ou des interactions. Les mineurs ont alors pour rôle de valider les blocs ajoutés à la chaîne et ainsi garantir les informations inscrites dans les registres de transactions dans les chaînes de blocs. Le contexte des chaînes de blocs mises en œuvre pour ce procédé serait plutôt d'ordre privé, c'est-à-dire mis en œuvre entre deux entités dans le cadre d'un contrat passé entre ces entités. Les deux acteurs sont les seuls concernés par la mise à disposition de dispositifs d'enregistrement. Cependant, ce type de procédé pourrait légitimement être étendu, par exemple pour la mise en œuvre d'un service faisant intervenir un plus grand nombre d'entités, et nécessitant que des ressources de minage ne soient pas uniquement contrôlées par une seule ou un nombre limité d'entités.

## Revendications

1. Procédé de contrôle de la répartition, entre une première et une seconde entité disposant chacune d'une infrastructure de réseau virtualisée, d'une pluralité (50, 51, 52, 5n) de dispositifs d'enregistrement d'événements, appelés mineurs, dans au moins un registre de données, portant sur au moins une ressource virtualisée (80), ledit procédé étant mis en œuvre par un dispositif de contrôle de la première entité (10) et comprenant :
- une étape d'obtention d'un ensemble de règles comprenant un taux de répartition des mineurs respectivement déployés dans la première entité et dans la seconde entité;
- une étape d'émission d'un message de configuration à au moins un dispositif de gestion de l'infrastructure virtualisée (20, 30) de chaque entité, le message comprenant ledit ensemble de règles ;
- une étape de réception d'un message de modification comprenant une information liée à l'arrivée, au départ, à la modification d'un mineur dans la pluralité, en provenance d'un dispositif de gestion de l'infrastructure virtualisée (20) de la première entité ;
- une étape d'envoi d'un premier message de notification comprenant l'information à au moins un dispositif de gestion de l'infrastructure virtualisée (30) de la deuxième entité ;
- une étape d'envoi d'un deuxième message de notification comprenant un paramètre basé sur l'information à au moins un dispositif de supervision (40) de l'au moins une ressource virtualisée (80) permettant au dit dispositif de prendre en compte la modification reçue.

2. Procédé de contrôle, selon la revendication 1, où l'étape d'obtention d'un ensemble de règles correspond à la réception d'un message, comprenant une information de configuration, émis par un système de support opérationnel.

3. Procédé de contrôle, selon la revendication 1 ou la revendication 2, où le message de configuration d'au moins un dispositif de gestion de l'infrastructure virtualisée de chaque entité (20, 30) comprend en outre une information liée à l'enregistrement des données dans le registre de données en vue d'adapter le mineur en charge de l'enregistrement.

4. Procédé de contrôle, selon l'une quelconque des revendications 1 à 3, où le message de modification comprenant l'information liée à l'arrivée, au départ ou à la modification d'un mineur dans la pluralité (50, 51, 52, 5n), comprend en outre une information liée à la configuration du mineur.

5. Procédé de contrôle, selon l'une quelconque des revendications 1 à 4, comprenant en outre une étape de création d'un nouveau mineur par un dispositif de gestion de l'infrastructure virtualisée de la deuxième entité (30) lors de la réception de l'information liée à l'arrivée ou au départ d'un mineur dans la pluralité, en provenance d'un dispositif de contrôle (10) de la première entité.

6. Procédé de contrôle, selon l'une quelconque des revendications 1 à 5, où l'ensemble de règles obtenues par le dispositif de contrôle (10) de la première entité comprend en outre une information sur la répartition des capacités d'enregistrement des mineurs (50, 51, 52, 5n) respectivement déployés dans la première entité et dans la deuxième entité.

7. Procédé de contrôle, selon l'une quelconque des revendications 1 à 6, où le dispositif de contrôle (10) est mis en œuvre dans un dispositif d'orchestration de services virtualisés , appelé en anglais Network Function Virtualization Orchestrator.

8. Procédé de contrôle, selon l'une quelconque des revendications 1 à 7, où le dispositif de gestion de l'infrastructure virtualisée d'au moins une des deux entités (20, 30) est mis en œuvre dans un Virtualized Infrastructure Manager, VIM.

9. Procédé de contrôle, selon l'une quelconque des revendications 1 à 8, où le deuxième message de notification comprenant un paramètre basé sur l'information liée à l'arrivée, au départ ou à la modification d'un mineur dans la pluralité (50, 51, 52, 5n) en provenance d'un dispositif de gestion de i'infrastructure virtuallsée de la première entité (20) et envoyée à au moins un dispositif de supervision de la ressource virtualisée (40), comprend en outre une information liée à la configuration du mineur.

10. Dispositif de contrôle (10), mis en œuvre dans une première entité, adapté pour mettre en œuvre un procédé de contrôle de la répartition, entre une première et une seconde entité disposant chacune d'une infrastructure de réseau virtualisée, d'une pluralité (50, 51, 52, 5n) de dispositifs d'enregistrement d'événements, appelés mineurs, dans au moins un registre de données, portant sur au moins une ressource virtualisée (80), comprenant :
- un module d'obtention (104) d'un ensemble de règles comprenant un taux de répartition des mineurs déployés dans la première entité et dans la seconde entité ;
- un émetteur (102) agencé pour
- émettre un message de configuration à au moins un dispositif de gestion (20, 30) de l'infrastructure virtualisée de chaque entité, comprenant ledit ensemble de règles ;
- émettre un premier message de notification comprenant une information liée à l'arrivée, au départ ou à la modification d'un mineur dans la pluralité (50, 51, 52, 5n) à au moins un dispositif de gestion de l'infrastructure virtualisée de la deuxième entité (30);
- émettre un deuxième message de notification comprenant un paramètre basé sur l'information à au moins un dispositif de supervision (40) de la dite ressource virtualisée (80) permettant au dit dispositif de prendre en compte la modification reçue ;
- un récepteur (101) agencé pour recevoir un message de modification comprenant une information liée à l'arrivée, au départ ou à la modification d'un mineur dans la pluralité (50, 51, 52, 5n), en provenance d'un dispositif de gestion de l'infrastructure virtualisée (20) de la première entité ;
- une base de données (106) agencée pour conserver les données liées à la répartition des mineurs dans les deux entités.

11. Dispositif de gestion d'une infrastructure virtualisée (20, 30) mis en œuvre dans une première et une seconde entité, disposant chacune d'une infrastructure de réseau virtualisée, comprenant :
- un récepteur agencé pour
- recevoir un message de configuration comprenant un ensemble de règles comprenant un taux de répartition des mineurs déployés dans la première entité et dans la seconde entité ;
- recevoir un premier message de notification comprenant une information liée à l'arrivée, au départ ou à la modification d'un mineur dans la pluralité (50, 51, 52, 5n) de mineurs;
- un émetteur agencé pour émettre un message de modification comprenant une information liée à l'arrivée, au départ ou à la modification d'un mineur dans la pluralité (50, 51, 52, 5n) de mineurs.

12. Système de contrôle de la répartition, entre une première et une seconde entité disposant chacune d'une infrastructure de réseau virtualisée, d'une pluralité (50, 51, 52, 5n) de dispositifs d'enregistrement d'événements, appelés mineurs, dans au moins un registre de données, portant sur au moins une ressource virtualisée (80), comprenant :
- au moins un dispositif de contrôle selon la revendication 10 ;
- au moins un dispositif de gestion d'une infrastructure virtualisée pour chaque entité, selon la revendication 11 ;
- au moins un dispositif de supervision d'une ressource virtualisée apte à recevoir une un paramètre basé sur l'information liée à l'arrivée, au départ, ou à la modification d'un mineur dans la pluralité (50, 51, 52, 5n) ;
- au moins un mineur.

13. Programme de contrôle de la répartition, **caractérisé en ce qu'**il comprend les instructions pour la mise en œuvre des étapes du procédé de contrôle selon la revendication 1, lorsque ledit programme est exécuté par un processeur.

14. Support d'enregistrement lisible par un dispositif de contrôle sur lequel est enregistré le programme selon la revendication 13

## Patentansprüche

1. Verfahren zur Steuerung der Verteilung einer Mehrzahl (50, 51, 52, 5n) von Ereignisaufzeichnungsvorrichtungen, Miner genannt, zwischen einer ersten und einer zweiten Einheit, die jeweils über eine virtualisierte Netzwerkinfrastruktur verfügen, in mindestens einem Datenregister, betreffend mindestens eine virtualisierte Ressource (80), wobei das Verfahren von einer Steuervorrichtung der ersten Einheit (10) durchgeführt wird und Folgendes umfasst:
- einen Schritt des Beziehens einer Reihe von Regeln umfassend einen Verteilungssatz der Miner, die jeweils in der ersten Einheit und in der zweiten Einheit eingesetzt sind;
- einen Schritt des Sendens einer Konfigurationsnachricht an mindestens eine Vorrichtung zur Verwaltung der virtualisierten Infrastruktur (20, 30) jeder Einheit, wobei die Nachricht die Reihe von Regeln umfasst;
- einen Schritt des Empfangens einer Änderungsnachricht umfassend eine Information in Verbindung mit der Ankunft, dem Verlassen, der Änderung eines Miners in der Mehrzahl, von einer Vorrichtung zur Verwaltung der virtualisierten Infrastruktur (20) der ersten Einheit;
- einen Schritt des Sendens einer ersten Benachrichtigungsnachricht umfassend die Information an mindestens eine Vorrichtung zur Verwaltung der virtualisierten Infrastruktur (30) der zweiten Einheit;
- einen Schritt des Sendens einer zweiten Benachrichtigungsnachricht umfassend einen Parameter basierend auf der Information an mindestens eine Vorrichtung zur Überwachung (40) der mindestens einen virtualisierten Ressource (80), die es der Vorrichtung gestattet, die empfangene Änderung zu berücksichtigen.

2. Steuerungsverfahren nach Anspruch 1, wobei der Schritt des Beziehens einer Reihe von Regeln dem Empfang einer Nachricht entspricht, die eine Konfigurationsinformation umfasst, die von einem Betriebsunterstützungssystem gesendet wird.

3. Steuerungsverfahren nach Anspruch 1 oder Anspruch 2, wobei die Konfigurationsnachricht mindestens einer Vorrichtung zur Verwaltung der virtualisierten Infrastruktur jeder Einheit (20, 30) ferner eine Information in Verbindung mit der Aufzeichnung der Daten im Datenregister zur Anpassung des Miners, der für die Aufzeichnung zuständig ist, umfasst.

4. Steuerungsverfahren nach einem der Ansprüche 1 bis 3, wobei die Änderungsnachricht umfassend die Information in Verbindung mit der Ankunft, dem Verlassen oder der Änderung eines Miners in der Mehrzahl (50, 51, 52, 5n) ferner eine Information in Verbindung mit der Konfiguration des Miners umfasst.

5. Steuerungsverfahren nach einem der Ansprüche 1 bis 4, ferner umfassend einen Schritt des Erzeugens eines neuen Miners durch eine Vorrichtung zur Verwaltung der virtualisierten Infrastruktur der zweiten Einheit (30) beim Empfang der Information in Verbindung mit der Ankunft oder dem Verlassen eines Miners in der Mehrzahl von einer Steuervorrichtung (10) der ersten Einheit.

6. Steuerungsverfahren nach einem der Ansprüche 1 bis 5, wobei die Reihe von Regeln, die von der Steuerungsvorrichtung (10) der ersten Einheit bezogen werden, ferner eine Information über die Verteilung der Aufzeichnungskapazitäten der Miner (50, 51, 52, 5n) umfasst, die jeweils in der ersten Einheit und in der zweiten Einheit eingesetzt werden.

7. Steuerungsverfahren nach einem der Ansprüche 1 bis 6, wobei die Steuerungsvorrichtung (10) in einer Vorrichtung zur virtualisierten Orchestrierung von Diensten, auf Englisch Network Function Virtualization Orchestrator genannt, eingesetzt wird.

8. Steuerungsverfahren nach einem der Ansprüche 1 bis 7, wobei die Vorrichtung zur Steuerung der virtualisierten Infrastruktur mindestens einer der zwei Einheiten (20, 30) in einem Virtualized Infrastructure Manager, VIM, eingesetzt wird.

9. Steuerungsverfahren nach einem der Ansprüche 1 bis 8, wobei die zweite Benachrichtigungsnachricht umfassend einen Parameter basierend auf der Information in Verbindung mit der Ankunft, dem Verlassen oder der Änderung eines Miners in der Mehrzahl (50, 51, 52, 5n) von einer Vorrichtung zur Verwaltung der virtualisierten Infrastruktur der ersten Einheit (20), und die an mindestens eine Vorrichtung zur Überwachung der virtualisierten Ressource (40) gesendet wird, ferner eine Information in Verbindung mit der Konfiguration des Miners umfasst.

10. Steuerungsvorrichtung (10), die in einer ersten Einheit eingesetzt wird, die geeignet ist, ein Verfahren zur Steuerung der Verteilung einer Mehrzahl (50, 51, 52, 5n) von Ereignisaufzeichnungsvorrichtungen, Miner genannt, zwischen einer ersten und einer zweiten Einheit, die jeweils über eine virtualisierte Netzwerkinfrastruktur verfügen, in mindestens einem Datenregister, betreffend mindestens eine virtualisierte Ressource (80), durchzuführen, umfassend:
- ein Modul zum Beziehen (104) einer Reihe von Regeln umfassend einen Verteilungssatz der Miner, die jeweils in der ersten Einheit und in der zweiten Einheit eingesetzt sind;
- einen Sender (102), der angeordnet ist,
- eine Konfigurationsnachricht an mindestens eine Vorrichtung zur Verwaltung (20, 30) der virtualisierten Infrastruktur jeder Einheit, umfassend die Reihe von Regeln, zu senden;
- eine erste Benachrichtigungsnachricht umfassend eine Information in Verbindung mit der Ankunft, dem Verlassen oder der Änderung eines Miners in der Mehrzahl (50, 51, 52, 5n), an mindestens eine Vorrichtung zur Verwaltung der virtualisierten Infrastruktur der zweiten Einheit (30) zu senden;
- eine zweite Benachrichtigungsnachricht umfassend einen Parameter basierend auf der Information an mindestens eine Vorrichtung zur Überwachung (40) der virtualisierten Ressource (80) zu senden, die es der Vorrichtung gestattet, die empfangene Änderung zu berücksichtigen;
- einen Empfänger (101), der angeordnet ist, eine Änderungsnachricht umfassend eine Information in Verbindung mit der Ankunft, dem Verlassen oder der Änderung eines Miners in der Mehrzahl (50, 51, 52, 5n) von einer Vorrichtung zur Verwaltung der virtualisierten Infrastruktur (20) der ersten Einheit zu empfangen;
- eine Datenbank (106), die angeordnet ist, die Daten in Verbindung mit der Verteilung der Miner in den zwei Einheiten aufzubewahren.

11. Vorrichtung zur Verwaltung einer virtualisierten Infrastruktur (20, 30), die in einer ersten und einer zweiten Einheit eingesetzt wird, die jeweils über eine virtualisierte Netzwerkinfrastruktur verfügen, umfassend:
- einen Empfänger, der angeordnet ist,
- eine Konfigurationsnachricht umfassend eine Reihe von Regeln umfassend einen Verteilungssatz der Miner, die in der ersten Einheit und in der zweiten Einheit eingesetzt sind, zu empfangen;
- eine erste Benachrichtigungsnachricht umfassend eine Information in Verbindung mit der Ankunft, dem Verlassen oder der Änderung eines Miners in der Mehrzahl (50, 51, 52, 5n) von Minern zu empfangen;
- einen Sender, der angeordnet ist, eine Änderungsnachricht umfassend eine Information in Verbindung mit der Ankunft, dem Verlassen oder der Änderung eines Miners in der Mehrzahl (50, 51, 52, 5n) von Minern zu senden.

12. System zur Steuerung der Verteilung einer Mehrzahl (50, 51, 52, 5n) von Ereignisaufzeichnungsvorrichtungen, Miner genannt, zwischen einer ersten und einer zweiten Einheit, die jeweils über eine virtualisierte Netzwerkinfrastruktur verfügen, in mindestens einem Datenregister, betreffend mindestens eine virtualisierte Ressource (80), umfassend:
- mindestens eine Steuerungsvorrichtung nach Anspruch 10;
- mindestens eine Vorrichtung zur Verwaltung einer virtualisierten Infrastruktur für jede Einheit nach Anspruch 11;
- mindestens eine Vorrichtung zur Überwachung einer virtualisierten Ressource, die geeignet ist, einen Parameter basierend auf der Information in Verbindung mit der Ankunft, dem Verlassen oder der Änderung eines Miners in der Mehrzahl (50, 51, 52, 5n) zu empfangen;
- mindestens einen Miner.

13. Verteilungssteuerungsprogramm, **dadurch gekennzeichnet, dass** es die Anweisungen zur Durchführung der Schritte des Steuerungsverfahrens nach Anspruch 1, wenn das Programm durch einen Prozessor ausgeführt wird, umfasst.

14. Speichermedium, das von einer Steuerungsvorrichtung gelesen werden kann, auf dem das Programm nach Anspruch 13 gespeichert ist.

## Claims

1. Method for controlling the distribution, between a first and a second entity that each have a virtualized network infrastructure, of a plurality (50, 51, 52, 5n) of devices, known as miners, for recording events in at least one data register in relation to at least one virtualized resource (80), said method being implemented by a control device (10) of the first entity and comprising:
- a step of obtaining a set of rules comprising a distribution ratio for the miners deployed in the first entity and in the second entity, respectively;
- a step of transmitting a configuration message to at least one device (20, 30) for managing the virtualized infrastructure of each entity, the message comprising said set of rules;
- a step of receiving a modification message comprising an item of information linked to the arrival, the departure or the modification of a miner in the plurality from a device (20) for managing the virtualized infrastructure of the first entity;
- a step of sending a first notification message comprising the item of information to at least one device (30) for managing the virtualized infrastructure of the second entity;
- a step of sending a second notification message comprising a parameter based on the item of information to at least one device (40) for supervising the at least one virtualized resource (80), allowing said device to take into account the received modification.

2. Control method according to Claim 1, wherein the step of obtaining a set of rules corresponds to the reception of a message, which comprises an item of configuration information, transmitted by an operational support system.

3. Control method according to Claim 1 or Claim 2, wherein the configuration message for at least one device (20, 30) for managing the virtualized infrastructure of each entity further comprises an item of information linked to the recording of the data in the data register in order to adapt the miner in charge of the recording.

4. Control method according to any one of Claims 1 to 3, wherein the modification message comprising the item of information linked to the arrival, the departure or the modification of a miner in the plurality (50, 51, 52, 5n) further comprises an item of information linked to the configuration of the miner.

5. Control method according to any one of Claims 1 to 4, further comprising a step of creating a new miner by means of a device (30) for managing the virtualized infrastructure of the second entity when the item of information linked to the arrival or the departure of a miner in the plurality is received from a control device (10) of the first entity.

6. Control method according to any one of Claims 1 to 5, wherein the set of rules obtained by the control device (10) of the first entity further comprises an item of information regarding the distribution of the recording capacities of the miners (50, 51, 52, 5n) deployed in the first entity and in the second entity, respectively.

7. Control method according to any one of Claims 1 to 6, wherein the control device (10) is implemented in a device for orchestrating virtualized services known as a Network Function Virtualization Orchestrator.

8. Control method according to any one of Claims 1 to 7, wherein the device (20, 30) for managing the virtualized infrastructure of at least one of the two entities is implemented in a Virtualized Infrastructure Manager, VIM.

9. Control method according to any one of Claims 1 to 8, wherein the second notification message comprising a parameter based on the item of information linked to the arrival, the departure or the modification of a miner in the plurality (50, 51, 52, 5n) from a device (20) for managing the virtualized infrastructure of the first entity, which is sent to at least one device (40) for supervising the virtualized resource, further comprises an item of information linked to the configuration of the miner.

10. Control device (10), which is implemented in a first entity and is suitable for implementing a method for controlling the distribution, between a first and a second entity that each have a virtualized network infrastructure, of a plurality (50, 51, 52, 5n) of devices, known as miners, for recording events in at least one data register in relation to at least one virtualized resource (80), comprising:
- a module (104) for obtaining a set of rules comprising a distribution ratio for the miners deployed in the first entity and in the second entity;
- a transmitter (102), which is designed to
- transmit a configuration message to at least one device (20, 30) for managing the virtualized infrastructure of each entity, the message comprising said set of rules;
- transmit a first notification message comprising an item of information linked to the arrival, the departure or the modification of a miner in the plurality (50, 51, 52, 5n) to at least one device (30) for managing the virtualized infrastructure of the second entity;
- transmit a second notification message comprising a parameter based on the item of information to at least one device (40) for supervising said virtualized resource (80), allowing said device to take into account the received modification;
- a receiver (101), which is designed to receive a modification message comprising an item of information linked to the arrival, the departure or the modification of a miner in the plurality (50, 51, 52, 5n) from a device (20) for managing the virtualized infrastructure of the first entity;
- a database (106), which is designed to store the data linked to the distribution of the miners in the two entities.

11. Device (20, 30) for managing a virtualized infrastructure, which device is implemented in a first and a second entity that each have a virtualized network infrastructure and comprises:
- a receiver, which is designed to
- receive a configuration message comprising a set of rules comprising a distribution ratio for the miners deployed in the first entity and in the second entity;
- receive a first notification message comprising an item of information linked to the arrival, the departure or the modification of a miner in the plurality (50, 51, 52, 5n) of miners;
- a transmitter, which is designed to transmit a modification message comprising an item of information linked to the arrival, the departure or the modification of a miner in the plurality (50, 51, 52, 5n) of miners.

12. System for controlling the distribution, between a first and a second entity that each have a virtualized network infrastructure, of a plurality (50, 51, 52, 5n) of devices, known as miners, for recording events in at least one data register in relation to at least one virtualized resource (80), comprising:
- at least one control device according to Claim 10;
- at least one device for managing a virtualized infrastructure for each entity according to Claim 11;
- at least one device for supervising a virtualized resource, which is able to receive a parameter based on the item of information linked to the arrival, the departure or the modification of a miner in the plurality (50, 51, 52, 5n);
- at least one miner.

13. Program for controlling the distribution, **characterized in that** it comprises the instructions for implementing the steps of the control method according to Claim 1 when said program is executed by a processor.

14. Recording medium, which is readable by a control device and on which the program according to Claim 13 is recorded.
